# EUROPÄISCHE PATENTSCHRIFT

(11) **EP 3 287 253 B1**
(45) Veröffentlichungstag und Bekanntmachung des Hinweises auf die Patenterteilung: **23.07.2025**
(21) Anmeldenummer: 17196268.1
(22) Anmeldetag: 31.08.2007
(51) Int. Cl.: B29C 48/02, B21C 23/24

(54) **VERFAHREN ZUR HERSTELLUNG EINES ZYLINDRISCHEN, STRANGFÖRMIGEN TEILS**
METHOD FOR THE PRODUCTION OF A CYLINDRICAL, STRAND-SHAPED PART
PROCÉDÉ DE FABRICATION D'UNE PARTIE DE FORME ALLONGÉE CYLINDRIQUE

(30) Priorität: 02.09.2006 EP 06018394
(43) Veröffentlichungstag der Anmeldung: 28.02.2018
(62) Teilanmeldung aus: 07803104.4
(73) Patentinhaber: Uponor Innovation AB, 15561 Nastola (FI)
(72) Erfinder: Freermann, Reinhold, 48607 Ochtrup (DE); Winterstein, Ralf, 98617 Meiningen (DE); Riesselmann, Franz-Josef, 49393 Lohne (DE)
(74) Vertreter: Fenner, Seraina

(56) Entgegenhaltungen:
- EP-A2- 0 202 953
- WO-A1-88/03084
- AU-A- 2 690 971
- DE-A1- 2 139 388
- US-A- 4 304 713
- US-A- 5 222 284
- US-A- 5 580 405
- DATABASE WPI Week 200257, Derwent World Patents Index; AN 2002-529768, XP002421878

## Beschreibung

Die Erfindung betrifft ein Verfahren zur Herstellung eines zylindrischen, strangförmigen Teils. Insbesondere betrifft die Erfindung die Herstellung von Metall-Kunststoff-Verbundrohren, wie sie beispielsweise im Sanitär- und Heizungsbereich Verwendung finden.

Kunststoff-Metall-Verbundrohre erfreuen sich zunehmender Beliebtheit, da sie die Vorteile der plastischen Verformbarkeit von Metallrohren mit den Vorteilen der Korrosionsbeständigkeit von Kunststoffrohren in sich vereinigen.

Derartige Kunststoff-Metall-Verbundrohre lassen sich auf verschiedene Arten und Weisen herstellen. So ist es beispielsweise bekannt, die Metallschicht eines solchen Verbundrohres durch Formen eines Metallstreifens herzustellen, wobei die Längsränder des Metallstreifens einander überlappen und verschweißt oder verklebt sind oder aber die Längsränder des Metallstreifens auf Stoß miteinander verschweißt sind. In das so geformte Metallrohr wird dann innen ein ein- oder mehrlagiges Kunststoffrohr hineinextrudiert. Beispiele für solche Herstellungsverfahren finden sich in DE-A-30 16 134, EP-A-0 353 977, EP-A-0 581 208, EP-A-0 920 972, WO-A-88/03084 und WO-A-01/85430.

Ferner ist es bekannt, das Metallrohr auf einem bereits hergestellten ein- oder mehrschichtigen Kunststoffrohr zu formen. Ein Beispiel für ein solches Herstellungsverfahren ist in EP-A-0 691 193 beschrieben. Weitere Beispiele finden sich in DE-A-43 10 272, DE-A-44 04 492, DE-C-195 36 689.

Schließlich ist es auch bekannt, die Metallschicht eines Kunststoff-Metall-Verbundrohres direkt auf ein bereits hergestelltes Kunststoffrohr durch Strangpressen aufzubringen. In EP-B-0 125 788 ist beschrieben, dass auf ein vorgefertigtes Kunststoffrohr mit radialem Abstand zu diesem ein Metallrohr extrudiert wird, das anschließend durch einen Zieh- oder dergleichen Durchmesserreduktionsprozess in seinem Durchmesser reduziert wird, um fest an dem Kunststoffrohr anzuliegen. Aus US-A-5 222 284 ist es bekannt, ein vorgefertigtes Kunststoffrohr im Durchmesser zu reduzieren, um anschließend um das Kunststoffrohr ein Metallrohr zu extrudieren (durch Strangpressen), woraufhin dann anschließend das im Durchmesser reduzierte Rohr unter Ausnutzung des Memory-Effekts sich wieder aufweitet, um dadurch dicht von innen an dem Metallrohr anzuliegen. Schließlich ist es aus DE-A-21 39 388 bekannt, ein nahtloses Metallrohr auf einen vorgefertigten Kunststoffschlauch mit Hilfe einer Metallmantelpresse aufzupressen. Problematisch hierbei sind die Temperaturen, die in der Metallmantelpresse durch die Extrusion des Metalls entstehen und auf den Kunststoffschlauch einwirken.

Weitere Kunststoff-Metall-Verbundrohre finden sich in AU 2690971 und US 4304713.

Aufgabe der Erfindung ist es, ein Verfahren zum Herstellen eines zylindrischen, strangförmigen Kunstoff-Metall-Verbundteils zu schaffen, das sich durch eine hohe Maßeinhaltung auszeichnet.

Zur Lösung dieser Aufgabe wird mit der Erfindung ein Verfahren zur Herstellung eines strangförmigen Teils vorgeschlagen, bei dem
- ein Hohlprofil aus Metall extrudiert wird,
- das extrudierte Metallhohlprofil abkühlt oder abgekühlt wird und
- in das extrudierte Metallhohlprofil nach oder während dessen Abkühlung ein ein- oder mehrlagiger Kunststoffstrang hineinextrudiert wird,
- wobei der Kunststoffstrang ein in das Metallhohlprofil eingeführtes, der Wärme des extrudierten Metallhohlprofils ausgesetztes Ausgabewerkzeugs eines Extruders passiert, welches eine Ausgabeöffnung aufweist, die innerhalb eines Bereichs des Metallhohlprofils angeordnet ist, in dem dieses gegenüber seiner Temperatur bei der Extrusion abgekühlt ist, und
- das Ausgabewerkzeug thermisch mit dem Metallhohlprofil gekoppelt ist und durch dieses temperiert wird, und das Ausgabewerkzeug die Wärme aus dem extrudierten Metallhohlprofil nutzt, ohne externe Wärmequelle, wenn das Ausgabewerkzeug in das Metallhohlprofil eingeführt ist.

Bei dem erfindungsgemäßen Verfahren wird zunächst die metallische Lage bzw. Schicht des zylindrischen strangförmigen Teils extrudiert, d. h. durch kontinuierliches Strangpressen oder Extrusion hergestellt, wobei alsdann oder zeitgleich ein ein- oder mehrlagiger Kunststoffstrang in die metallische Schicht bzw. Lage hineinextrudiert wird. Diese Vorgehensweise hat den Vorteil, dass das Außenmaß des zylindrischen strangförmigen Teils durch den Strangpressvorgang der metallischen Schicht bzw. Lage, also durch den Strangpressvorgang für das Metallrohr, definiert ist. Eine Nachbearbeitung des hergestellten strangförmigen Teils zum Zwecke von dessen Durchmesserreduktion bzw. zum Zwecke einer Durchmesserreduktion des Metallrohres ist nicht erforderlich.

Das nach dem Strangpressvorgang erwärmte Metallrohr wirkt sich zusammen mit der erwärmten ein- oder mehrlagigen Kunststoffschmelze bezüglich einer innigen Haftung an dem Metallrohr positiv aus.

Die bei der Extrusion des Metalls entstehende Wärme ist bei weitem zu groß, als dass unmittelbar nach der Extrusion der Kunststoffstrang in das Metallhohlprofil hineinextrudiert werden kann. Hierzu bedarf es vielmehr eines Ortes innerhalb des Metallhohlprofils, der in Maschinenrichtung stromab der Extrusion des Metalls angeordnet ist. Dies wird erfindungsgemäß mit Hilfe eines in das Metallhohlprofil weit hineinragenden dornförmigen Ausgabewerkzeuges realisiert. Dieses Ausgabewerkzeug, das im wesentlichen nach Art eines Rohres bzw. Dorns ausgebildet ist, transportiert die Kunststoffschmelze. Damit diese Kunststoffschmelze über den verhältnismäßig langen Weg durch das Ausgabewerkzeug seine für die Extrusion erforderliche Temperatur beibehält, müsste man dieses Ausgabewerkzeug beheizen.

Überraschenderweise hat sich nun gezeigt, dass für die Aufheizung bzw. Temperierung des Ausgabewerkzeuges die Wärme, die von dem extrudierten Metallhohlprofil ausgeht, genutzt werden kann. Damit werden zwei Effekte erreicht, nämlich zum einen, dass sich das Metallhohlprofil durch Abgabe seiner Wärme an das Ausgabewerkzeug abkühlt, und zum anderen, dass das Ausgabewerkzeug temperiert wird, ohne andere externe Wärmequellen zu nutzen.

Nur durch die nachträgliche Extrusion der Kunststoffschmelze von innen in das nahtlos hergestellte, extrudierte Metallhohlprofil lassen sich die unterschiedlichen Materialien Metall und Kunststoff maßhaltig miteinander verarbeiten. Dabei wird die hohe Maßhaltigkeit dadurch erzielt, dass das Metallrohr nahtlos hergestellt ist (Extrusion). Das Aufpressen bzw. Aufextrudieren des Metallrohres auf ein vorgefertigtes Kunststoffrohr, was ebenfalls zu einer hohen Maßhaltigkeit führen würde, scheidet wegen der hohen Temperaturen des extrudierten Metallhohlprofils aus. Die Extrusion des Kunststoffstrangs in das extrudierte Metallhohlprofil hinein gelingt erfindungsgemäß dadurch, dass das Ausgabewerkzeug eine beträchtliche Länge aufweist, so dass die Kunststoffschmelze erst dann mit dem Metallhohlprofil in Kontakt kommt, wenn dieses bereits auf eine für den Kunststoff verträgliche Temperatur abgekühlt ist. Hierbei macht man sich, wie bereits oben erwähnt, zu Nutze, dass die Temperierung des Ausgabewerkzeuges über dessen volle Länge durch die Wärmeabgabe des extrudierten Metallhohlprofils erfolgt.

Mit dem erfindungsgemäßen Verfahren lassen sich insbesondere zylindrische, strangförmige Hohl- oder Vollprofilteile herstellen. Insbesondere ist das Verfahren geeignet für die Herstellung von Mehrschicht-Kunststoff-Metall-Verbundrohren.

Bei einer Weiterbildung der Erfindung lässt sich außen auf das Metallrohr eine ein- oder mehrlagige Kunststoffschicht vorzugsweise durch Extrusion aufbringen. Die Extrusion der außenliegenden Kunststoffschicht kann direkt auf das extrudierte Metallrohr oder nach dessen Abkühlung erfolgen. Werden mehrere Kunststoffschichten extrudiert, so kann dies durch Tandemextrusion der Einzellagen oder durch eine Coextrusion erfolgen.

Das Metallrohr besteht bei einer vorteilhaften Ausgestaltung der Erfindung vorzugsweise aus Aluminium oder einer Aluminiumlegierung. Bei den mehrlagigen Kunststoffschichten, die in das Metallrohr hineinextrudiert werden bzw. außen auf das Metallrohr aufgebracht werden können, handelt es sich vorzugsweise um thermoplastische Materialien, wobei die jeweils an das Metallrohr angrenzenden Kunststoffschichten thermoplastische Haftvermittler umfassen.

Das erfindungsgemäße Verfahren eignet sich insbesondere zur Herstellung von im Durchmesser größeren (beispielsweise ab 40 mm) Mehrschicht-Kunststoff/Metall-Verbundrohre, bei denen das Metallrohr aufgrund seiner Wanddicke nach seiner Herstellung nur mit großem Aufwand im Durchmesser reduziert werden kann, um in Kontakt mit dem innenliegenden Kunststoffstrang zu gelangen. Auf diese Durchmesserreduktion des Metallrohrs wird daher erfindungsgemäß verzichtet, indem der Kunststoffstrang in das fertig hergestellte Metallrohr hineinextrudiert wird (und zwar an dessen Innenseite). Der Nachteil einer Durchmesserreduktion des Metallrohrs besteht auch darin, dass es aufgrund der Umformung des Metalls zu Materialverhärtungen kommt, was sich wiederum nachteilig auf die Biegbarkeit des hergestellten Metall-Kunststoff-Verbundrohres auswirkt. Insoweit hat das erfindungsgemäße Verfahren auch Vorteile bei der Herstellung im Durchmesser kleinerer (beispielsweise bis 40 mm) Mehrschicht-Kunststoff/Metall-Verbundrohre, da auf die bei diesen Rohrdimensionen maschinell beherrschbare Durchmesserreduktion des Metallrohres verzichtet werden kann. Die Herstellung im Durchmesser kleinerer Mehrschicht-Kunststoff/Metall-Verbundrohre ist erfindungsgemäß nicht zuletzt auch deshalb möglich, weil das Ausgabewerkzeug zu seiner Temperierung nicht mit separaten Heizelementen oder dergleichen, die Bestandteil des Ausgabewerkzeugs sein müssten und dieses damit im Durchmesser vergrößern würden, erwärmt werden muss, da die erforderliche Wärme zur Temperierung des Ausgabewerkzeuges durch die Wärme des extrudierten Metallhohlprofils zur Verfügung gestellt wird.

Die Erwärmung des Ausgabewerkzeuges durch das sich abkühlende, extrudierte Metallhohlprofil wird zweckmäßigerweise durch eine thermische Kopplung zwischen beiden realisiert. Hierbei ist es besonders zweckmäßig, wenn das extrudierte Metallhohlprofil sich unter Kontakt mit dem Ausgabewerkzeug über dieses bewegt. Dabei kann das Ausgabewerkzeug die weitere Funktion der Formstabilisierung des extrudierten Metallhohlprofils innerhalb der Phase unmittelbar nach der Extrusion übernehmen. Alternativ kann die thermische Kopplung auch durch Aufnahme von Strahlungswärme des Metallhohlprofils durch das Ausgabewerkzeug erfolgen. Hierbei erstreckt sich das extrudierte Metallhohlprofil längs des Ausgabewerkzeuges unter Bildung eines Luftspalts.

Bei dem Ausgabewerkzeug handelt es sich zweckmäßigerweise um ein Rohr oder dornförmiges Werkzeug, das einen Ringraum aufweist, an dessen Ausgabeende eine Ringdüse angeordnet ist. Der Ringraum, der durch zwei zueinander konzentrische Wände bzw. Flächen (z.B. Rohre) definiert ist, kann durch die Wände verbindende Stege oder dergleichen stabilisiert sein. Diese Stege werden von der den Ringraum passierenden Kunststoffschmelze umströmt, was für den Extrusionsprozess des Kunststoffstrangs nicht von Nachteil ist. Bei einem mehrschichtigen Kunststoffschmelzenstrom sollte der Ringraum über seine gesamte Länge frei sein. Die sich zwischen den Ringraum bildenden Rohre sind dann an ihren einen Enden gegeneinander fixiert.

Das erfindungsgemäße Verfahren eignet sich auch, wie bereits oben erwähnt, zur Herstellung von Vollprofilteilen. Beispielsweise kann das erfindungsgemäße Verfahren zur Herstellung eines von Kunststoff und Metall umgebenen Kabels oder eines anderen Voll- oder Hohlprofils in im wesentlichen nicht deformierbarer und temperaturbeständiger Form, z.B. ein Metallrohr, eingesetzt werden. Das Kabel bzw. Profil wird durch die Ringdüsen der Extruder für den Kunststoffstrang und das Metallrohr zentrisch hindurchgeführt, so dass bei der Extrusion des Kunststoffstrangs der Raum zwischen dem zentrisch angeordneten Leiter und dem Metallrohr mit Kunststoffmaterial ausgefüllt wird. Bei diesem Kunststoffmaterial kann es sich beispielsweise um ein schäumbares Kunststoffmaterial handeln. Hierbei ist ein Haftvermittler nicht zwingend erforderlich, wenn gewährleistet ist, dass der schäumbare Kunststoff selbst ausreichend stabil an der Innenseite des Metallrohres haftet.

Die Erfindung wird nachfolgend anhand der Ausführungsbeispiele und unter Bezugnahme auf die Zeichnung näher erläutert. Im einzelnen zeigen dabei:
- Fig. 1: die Extrusions-Anlagenkomponenten für die Herstellung eines zylindrischen, strangförmigen Hohlprofilteils gemäß einem ersten Ausführungsbeispiel der Erfindung,
- Fig. 2: die Extrusions-Anlagenkomponenten für die Herstellung eines zylindrischen, strangförmigen Hohlprofilteils gemäß einem zweiten Ausführungsbeispiel der Erfindung, und
- Fig. 3: die Extrusions-Anlagenkomponenten für die Herstellung eines zylindrischen, strangförmigen Vollprofilteils gemäß einem ersten und zweiten Ausführungsbeispiel der Erfindung.

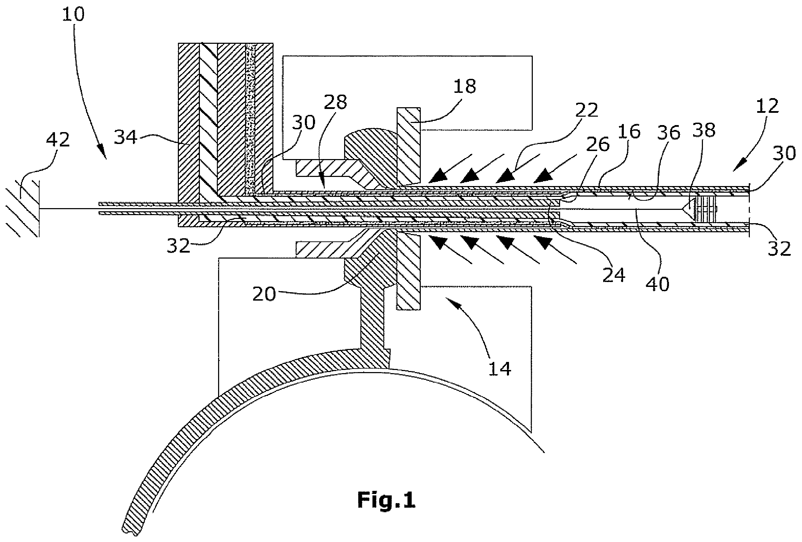

Fig. 1 zeigt schematisch die wesentlichen Anlagenkomponenten einer Vorrichtung 10 zur Herstellung eines Mehrschicht-Kunststoff/Metall-Verbundrohres 12. Zur Vorrichtung 10 gehört ein Extruder 14 bzw. eine Strangpress-Einheit zur Herstellung eines Aluminiumrohres 16. Die Ringdüse des Extruders 14 ist bei 18 dargestellt, während das für den plastischen Verformungsprozess erwärmte Metall mit 20 bezeichnet ist. Das extrudierte Aluminiumrohr 16 wird beispielsweise bei Temperaturen zwischen 450 und 500 °C extrudiert und kühlt dann nach dem Austritt aus der Düse 18 ab (beispielsweise auf 200 bis 250 °C, was bei 22 angedeutet ist).

In das extrudierte Metallrohr 16 ist durch die Ringdüse 18 hindurch ein hohler Dorn 24 zentrisch eingeführt, der an seinem einen Ende eine Ringdüse 26 aufweist, über die ein zweilagiger hohlzylindrischer Kunststoffstrang 28 austritt, der außen eine Kunststoff-Haftvermittlerschicht 30 und innen eine das spätere Basisrohr bildende Innenkunststoffschicht 32 umfasst. Beide Kunststoffschichten werden über einen Coextruder 34 gemeinsam in das abgekühlte Metallrohr 16 hineinextrudiert, und zwar gegen dessen Innenseite 36. Damit die Kunststoffschmelze dort zuverlässig verbleibt, wird durch den Dorn 24 ein Gas, z.B. Luft, in den Kunststoffschmelzeschlauch (hohlzylindrischer Kunststoffschmelzestrang 28) eingeleitet und damit ein Überdruck aufgebaut. Der Überdruck bleibt im Kunststoffrohrstrang 28 durch einen in diesem angeordneten Stopfen 38 aufrechterhalten, der über ein durch den Hohldorn 24 hindurchgeführtes Seil 40 außerhalb der Extrusionskomponenten der Vorrichtung 10 bei 42 befestigt ist. Anstelle des Stopfens 38 kann das hergestellte Metallrohr 16 mit innenliegendem Kunststoffstrang abgequetscht werden, um ein Entweichen des Überdrucks zu vermeiden.

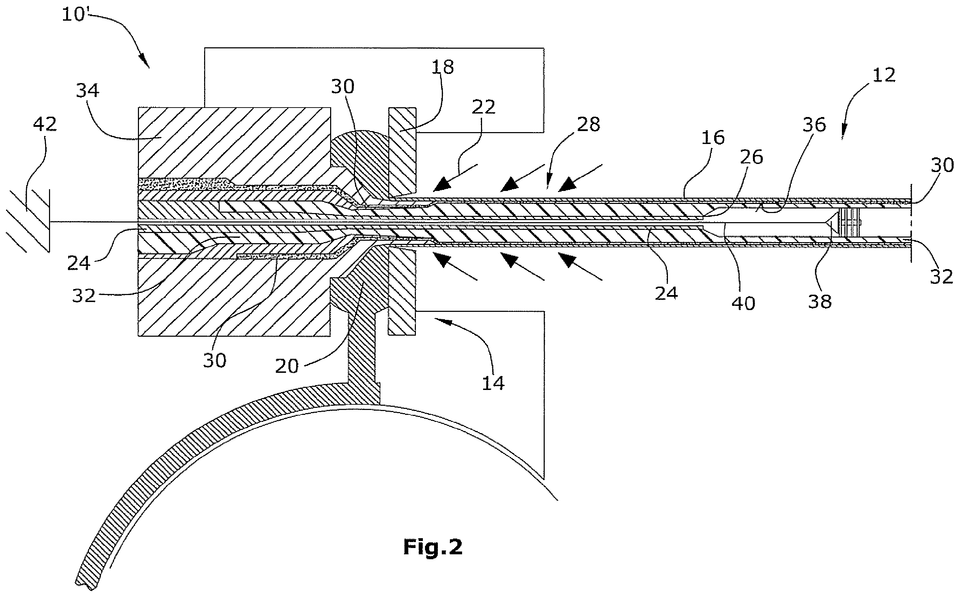

Fig. 2 zeigt eine geringfügig abgewandelte Variante 10' einer Vorrichtung zur Herstellung eines Mehrschicht-Kunststoff/Metall-Verbundrohres 12. Soweit die in Fig. 2 gezeigten Anlagenkomponenten identisch bzw. funktionsgleich mit den Anlagenkomponenten gemäß Fig. 1 sind, sind sie mit den gleichen Bezugszeichen versehen.

Im Unterschied zur Vorrichtung 10 der Fig. 1 werden bei der Vorrichtung 10' der Fig. 2 das Metallrohr 16 und der Kunststoffstrang 28 coextrudiert. Ansonsten läuft der Herstellungsprozess so, wie oben beschrieben, ab.

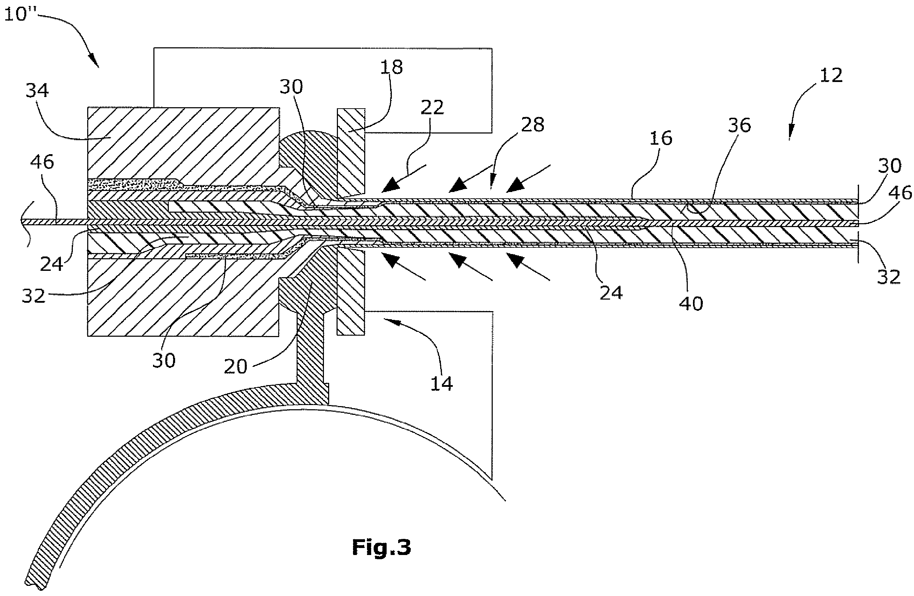

Fig. 3 zeigt eine Vorrichtung 10 ", die ähnlich zur Vorrichtung 10' der Fig. 2 aufgebaut ist, bei Fig. 3 jedoch der Herstellung eines zylindrischen, strangförmigen Voll- oder Hohlprofilteils 44 in im wesentlichen nicht deformierbarer und temperaturbeständiger Form dient. Die sich in den Anlagenkomponenten und Elementen der Figuren 1 und 2 gleichenden Teile sind in Fig. 3 mit den gleichen Bezugszeichen versehen.

Das Metallrohr 16 und der Kunststoffstrang 28 werden bei der Vorrichtung 10" der Fig. 3 wiederum im wesentlichen coextrudiert. Durch den Hohldorn 24 des Extruders 34 für den Kunststoffstrang 28 ist ein elektrischer Leiter 46 hindurchgeführt, der nach dem Verlassen des Hohldorns 24 von dem Material des Kunststoffstrangs 28 eingebettet und umhüllt wird, so dass sich das Kunststoffmaterial zwischen der Innenseite 36 des Metallrohres 16 und dem elektrischen Leiter 46 befindet. Mit der Vorrichtung 10" der Fig. 3 lassen sich also beispielsweise elektrisch isolierte Kabel herstellen, die ein metallisches Rohr aufweisen, welches den elektrischen Leiter 46 unter Zwischenschaltung eines Kunststoffmaterials beinhaltet.

Bezüglich der in den Figuren 1 bis 3 gezeigten Vorrichtungen 10, 10' und 10" sei noch gesagt, dass diese Vorrichtungen noch zusätzlich einen oder mehrere Extruder oder einen Coextruder zum Aufbringen ein- oder mehrlagiger Kunststoffschichten außen auf das Metallrohr 16 umfassen können. Diese bei der Rohrherstellung bekannten zusätzlichen Extruder sind aus Vereinfachungsgründen in den Figuren 1 bis 3 nicht eingezeichnet.

## Patentansprüche

1. Verfahren zur Herstellung eines strangförmigen Teils, bei dem
- ein Hohlprofil (16) aus Metall extrudiert wird,
- das extrudierte Metallhohlprofil (16) abkühlt oder abgekühlt wird und
- in das extrudierte Metallhohlprofil (16) nach oder während dessen Abkühlung ein ein- oder mehrlagiger Kunststoffstrang (28) hineinextrudiert wird, **dadurch gekennzeichnet, dass**
- der Kunststoffstrang (28) ein in das Metallhohlprofil (16) eingeführtes, der Wärme des extrudierten Metallhohlprofils (16) ausgesetztes Ausgabewerkzeugs (24) eines Extruders (34) passiert, welches eine Ausgabeöffnung (26) aufweist, die innerhalb eines Bereichs des Metallhohlprofils (16) angeordnet ist, in dem dieses gegenüber seiner Temperatur bei der Extrusion abgekühlt ist, und
- das Ausgabewerkzeug (24) thermisch mit dem Metallhohlprofil (16) gekoppelt ist und durch dieses temperiert wird, und das Ausgabewerkzeug (24) die Wärme aus dem extrudierten Metallhohlprofil (16) nutzt, ohne externe Wärmequelle, wenn das Ausgabewerkzeug (24) in das Metallhohlprofil (16) eingeführt ist.

2. Verfahren nach Anspruch 1, **dadurch gekennzeichnet, dass** das Ausgabewerkzeug (24) die Innenseiten des Metallhohlprofils (16) kontaktiert.

3. Verfahren nach Anspruch 1 oder 2, **dadurch gekennzeichnet, dass** außen auf das Metallhohlprofil (16) eine ein- oder mehrlagige Kunststoffschicht vorzugsweise durch Extrusion, Tandemextrusionen oder Coextrusion aufgebracht wird.

4. Verfahren nach einem der Ansprüche 1 bis 3, **dadurch gekennzeichnet, dass** der in das Metallhohlprofil (16) hineinextrudierte ein- oder mehrlagige Kunststoffstrang (28) als Kunststoffrohr ausgebildet wird und dass innerhalb des Kunststoffrohres zum Andrücken des Kunststoffrohres gegen das Metallrohr (16) ein Überdruck erzeugt wird.

5. Verfahren nach einem der Ansprüche 1 bis 3, **dadurch gekennzeichnet, dass** der ein- oder mehrlagige Kunststoffstrang (28) als Vollprofil ausgebildet wird und dass in das Vollprofil während dessen Extrusion ein Voll- oder Hohlprofilteil in im wesentlichen nicht deformierbarer und temperaturbeständiger Form, insbesondere ein ein- oder mehradriger elektrischer Leiter (46) eingebracht wird.

6. Verfahren nach einem der Ansprüche 1 bis 5, **dadurch gekennzeichnet, dass** das Metallhohlprofil (16) ein unterhalb seines Schmelzpunktes plastisch verformbares und extrudierbares Metall oder eine unterhalb ihres Schmelzpunktes plastisch verformbare und extrudierbare Metalllegierung aufweist.

7. Verfahren nach Anspruch 6, **dadurch gekennzeichnet, dass** das Metall Aluminum oder die Metalllegierung eine Aluminiumlegierung aufweist.

8. Verfahren nach einem der Ansprüche 1 bis 7, **dadurch gekennzeichnet, dass** der Kunststoffstrang (28) eine Außenlage (30) aus einem Haftvermittler und eine an die Außenlage (30) angrenzende Polymermateriallage aufweist.

9. Verfahren nach Anspruch 3 oder einem der vorhergehenden Ansprüche, soweit auf Anspruch 3 rückbezogen, **dadurch gekennzeichnet, dass** die außen auf das Metallhohlprofil (16) aufgebrachte Kunststoffschicht eine an das Metallhohlprofil (16) angrenzende Innenlage aus Haftvermittler und eine an diese Innenlage angrenzende Außenlage aus Polymermaterial aufweist.

10. Verfahren nach einem der Ansprüche 1 bis 9, **dadurch gekennzeichnet, dass** das Metallrohr und der Kunststoffstrang (28) coextrudiert oder durch aufeinanderfolgend angeordnete Extruder erzeugt werden.

11. Verfahren nach einem der Ansprüche 1 bis 10, **dadurch gekennzeichnet, dass** das Metallhohlprofil (16) ein Metallrohr ist.

12. Verfahren nach einem der Ansprüche 1 bis 11, **dadurch gekennzeichnet, dass** der Kunststoffstrang (28) ein insbesondere aufschäumbares Kunststoffmaterial aufweist, das haftende oder nicht haftende Eigenschaften zum Metall aufweist.

13. Verfahren nach einem der Ansprüche 1 bis 12, **dadurch gekennzeichnet, dass** das Ausgabewerkzeug (24) einen Dorn mit einem Ringraum aufweist, an dessen axialem Ende sich eine Ringdüse als Ausgabeöffnung (26) des Dorns befindet.

## Claims

1. Method for producing a strand-shaped part, in which
- a hollow profile (16) made of metal is extruded,
- the extruded metal hollow profile (16) cools and/or is cooled, and
- a single- or multi-layer plastic strand (28) is extruded into the extruded metal hollow profile (16) after or during its cooling, **characterized in that**
- the plastic strand (28) passes through a discharge tool (24) of an extruder (34) which is inserted into the metal hollow profile (16) and exposed to the heat of the extruded metal hollow profile (16), said extruder having a discharge opening (26) arranged within a region of the metal hollow profile (16) in which it has cooled compared to its temperature during extrusion, and
- the discharge tool (24) is thermally coupled to the metal hollow profile (16) and is temperature-controlled by it, and the discharge tool (24) uses the heat from the extruded metal hollow profile (16) without an external heat source if the discharge tool (24) is introduced into the metal hollow profile (16).

2. Method according to Claim 1, **characterized in that** the discharge tool (24) contacts the inner sides of the metal hollow profile (16).

3. Method according to Claim 1 or 2, **characterized in that** a single-layer or multi-layer plastic layer is applied to the outside of the metal hollow profile (16), preferably by extrusion, tandem extrusion or coextrusion.

4. Method according to any one of Claims 1 to 3, **characterized in that** the single-layer or multi-layer plastic strand (28) extruded into the metal hollow profile (16) is formed as a plastic pipe and that an overpressure is generated within the plastic pipe to press the plastic pipe against the metal pipe (16).

5. Method according to any one of Claims 1 to 3, **characterized in that** the single- or multi-layer plastic strand (28) is formed as a solid profile and that a solid or hollow profile part in a substantially non-deformable and temperature-resistant form, in particular a single- or multi-core electrical conductor (46), is introduced into the solid profile during its extrusion.

6. Method according to any one of Claims 1 to 5, **characterized in that** the metal hollow profile (16) comprises a metal which is plastically deformable and extrudable below its melting point or a metal alloy which is plastically deformable and extrudable below its melting point.

7. Method according to Claim 6, **characterized in that** the metal is aluminium or the metal alloy has an aluminium alloy.

8. Method according to any one of Claims 1 to 7, **characterized in that** the plastic strand (28) has an outer layer (30) made of an adhesion promoter and a polymer material layer adjacent to the outer layer (30).

9. Method according to Claim 3 or any one of the preceding claims, as far as they refer back to Claim 3, **characterized in that** the plastic layer applied externally to the metal hollow profile (16) has an inner layer of adhesion promoter adjacent to the metal hollow profile (16) and an outer layer of polymer material adjacent to this inner layer.

10. Method according to any one of Claims 1 to 9, **characterized in that** the metal pipe and the plastic strand (28) are coextruded or produced by successively arranged extruders.

11. Method according to any one of Claims 1 to 10, **characterized in that** the metal hollow profile (16) is a metal pipe.

12. Method according to any one of Claims 1 to 11, **characterized in that** the plastic strand (28) comprises a particularly foamable plastic material which has adhesive or non-adhesive properties to the metal.

13. Method according to any one of Claims 1 to 12, **characterized in that** the discharge tool (24) has a mandrel with an annular space, at the axial end of which there is located an annular nozzle as a discharge opening (26) of the mandrel.

## Revendications

1. Procédé de fabrication d'une pièce en forme de barre, dans lequel
- un profilé creux (16) en métal est extrudé,
- le profilé creux en métal (16) extrudé refroidit ou est refroidi, et
- une barre en matière plastique (28) monocouche ou multicouche est extrudée dans le profilé creux en métal (16) extrudé après ou pendant son refroidissement, **caractérisé en ce que**
- la barre en matière plastique (28) traverse un outil de distribution (24) d'une extrudeuse (34) introduit dans le profilé creux en métal (16), exposé à la chaleur du profilé creux en métal (16) extrudé, lequel comporte une ouverture de distribution (26), qui est disposée à l'intérieur d'une zone du profilé creux en métal (16), dans laquelle celui-ci est refroidi par rapport à sa température lors de l'extrusion, et
- l'outil de distribution (24) est couplé thermiquement au profilé creux en métal (16) et est thermorégulé par ce celui-ci, et l'outil de distribution (24) utilise la chaleur provenant du profilé creux en métal (16) extrudé sans source de chaleur externe, lorsque l'outil de distribution (24) est introduit dans le profilé creux en métal (16).

2. Procédé selon la revendication 1, **caractérisé en ce que** l'outil de distribution (24) entre en contact avec les côtés intérieurs du profilé creux en métal (16).

3. Procédé selon la revendication 1 ou 2, **caractérisé en ce qu'**une couche en matière plastique monocouche ou multicouche est appliquée par extrusion, par extrusion tandem ou par coextrusion à l'extérieur sur le profilé creux en métal (16).

4. Procédé selon l'une des revendications 1 à 3, **caractérisé en ce que** la barre en matière plastique (28) monocouche ou multicouche extrudée dans le profilé creux en métal (16) est réalisée comme un tuyau en matière plastique et qu'une surpression est produite à l'intérieur du tuyau en matière plastique pour appuyer le tuyau en matière plastique contre le tuyau en métal (16).

5. Procédé selon l'une des revendications 1 à 3, **caractérisé en ce que** la barre en matière plastique (28) monocouche ou multicouche est réalisée en tant qu'un profilé plein, et qu'une pièce de profilé pleine ou creuse, sous une forme sensiblement non déformable et résistante aux températures, en particulier un conducteur électrique (46) monofilaire ou multifilaire, est introduite dans le profilé plein pendant son extrusion.

6. Procédé selon l'une des revendications 1 à 5, **caractérisé en ce que** le profilé creux en métal (16) comporte un métal plastiquement déformable et extrudable sous son point de fusion ou un alliage métallique plastiquement déformable et extrudable sous son point de fusion.

7. Procédé selon la revendication 6, **caractérisé en ce que** le métal comporte de l'aluminium ou l'alliage métallique comporte un alliage d'aluminium.

8. Procédé selon l'une des revendications 1 à 7, **caractérisé en ce que** la barre en matière plastique (28) comporte une couche extérieure (30) composée d'un promoteur d'adhérence et une couche de matériau polymère jouxtant la couche extérieure (30).

9. Procédé selon la revendication 3 ou l'une des revendications précédentes, dans la mesure où elles se rapportent à la revendication 3, **caractérisé en ce que** la couche en matière plastique appliquée à l'extérieur sur le profilé creux en métal (16) comporte une couche intérieure composée d'un promoteur d'adhérence jouxtant le profilé creux en métal (16) et une couche extérieure composée de matériau polymère jouxtant la couche intérieure.

10. Procédé selon l'une des revendications 1 à 9, **caractérisé en ce que** le tuyau en métal et la barre en matière plastique (28) sont coextrudés ou sont produits par des extrudeuses disposées successivement.

11. Procédé selon l'une des revendications 1 à 10, **caractérisé en ce que** le profilé creux en métal (16) est un tuyau en métal.

12. Procédé selon l'une des revendications 1 à 11, **caractérisé en ce que** la barre en matière plastique (28) comporte un matériau en matière plastique en particulier moussant, qui présente des propriétés adhésives ou non adhésives par rapport au métal.

13. Procédé selon l'une des revendications 1 à 12, **caractérisé en ce que** l'outil de distribution (24) comporte un mandrin avec un espace annulaire, sur l'extrémité axiale duquel se trouve une buse annulaire en tant qu'ouverture de distribution (26) du mandrin.
